# EUROPEAN PATENT APPLICATION

(11) **EP 4 135 171 A1**
(43) Date of publication of application: **15.02.2023**
(21) Application number: 21785335.7
(22) Date of filing: 09.03.2021
(51) Int. Cl.: H02K 11/215, H02K 21/12, H02P 6/16

(54) **SINGLE PHASE BRUSHLESS DC MOTOR**

(30) Priority: 08.04.2020 JP 2020069747
(71) Applicant: Nidec Servo Corporation, Kiryu-shi, Gunma 376-0011 (JP)
(72) Inventor: ITO, Hideaki, Kiryu-shi, Gunma 376-0011 (JP); TANNO, Taro, Kiryu-shi, Gunma 376-0011 (JP)
(74) Representative: Viering, Jentschura & Partner mbB Patent- und Rechtsanwälte
(86) International application number: PCT/JP2021/009385
(87) International publication number: WO 2021/205804

(57) **Abstract**

The present invention provides a single-phase brushless DC motor including: a rotor rotatable about a central axis; a stator including a plurality of salient pole portions, a stator core having a slot between the salient pole portions, and a winding wound around the salient pole portions, the stator facing the rotor with an air gap interposed therebetween; and a substrate fixed to the stator and equipped with a driver that performs energization control of the winding, in which the driver incorporates a Hall element that acquires a timing of the energization control, and the substrate is equipped with a Hall IC that detects a circumferential position of the rotor separately from the driver.

## Description

The present invention relates to a single-phase brushless DC motor.

### Background ART

Conventionally, it is known that excitation of a stator is switched by switching energization to a coil wound around the stator on the basis of a rotational position, that is, a circumferential position, of a rotor detected by a Hall element, by which a motor is driven (see Patent Literature 1).

### CITATIONS LIST

### PATENT LITERATURE

Patent Literature 1: JP H11-332193 A

### SUMMARY OF INVENTION

### TECHNICAL PROBLEMS

For the purpose of obtaining the excitation switching timing of the stator, it is conceivable to use a driver that is an IC having incorporated therein a Hall element and capable of outputting the excitation switching timing. When the driver described above is used, a reduction in size and a reduction in cost of the motor can be achieved.

On the other hand, recently, there has been a demand for acquiring the rotational position of the rotor for a purpose other than the purpose of obtaining the excitation switching timing of the stator. In this case, it is also conceivable to use an output signal of the driver, but since the driver outputs a signal optimized for switching the excitation of the stator, the output signal may deviate from the actual rotational position of the rotor. Therefore, there is a problem that an accurate rotational position of the rotor cannot be obtained.

An object of the present invention is to detect an accurate rotational position of a rotor.

### SOLUTION TO THE PROBLEMS

A first exemplary aspect of the present application provides a single-phase brushless DC motor comprising: a rotor rotatable about a central axis; a stator including a plurality of salient pole portions, a stator core having a slot between the salient pole portions, and a winding wound around the salient pole portions, the stator facing the rotor with an air gap interposed therebetween; and a substrate fixed to the stator and equipped with a driver that performs energization control of the winding, wherein the driver incorporates a Hall element that acquires a timing of the energization control, and the substrate is equipped with a Hall IC that detects a circumferential position of the rotor separately from the driver.

### ADVANTAGEOUS EFFECTS OF INVENTION

According to the first exemplary aspect of the present application, an accurate rotational position of the rotor can be detected in the single-phase brushless DC motor.

### Brief Description Of Drawings

FIG. 1 is a perspective view illustrating a motor according to a first embodiment of the present invention.
FIG. 2 is a side sectional view for describing a structure of a motor 10 in FIG. 1.
FIG. 3 is a cross-sectional plan view illustrating the motor 10 in FIG. 1 taken along a plane orthogonal to a Y axis and located on a second side in an axial direction with respect to a salient pole portion 220 of a stator 200 and on a first side in the axial direction with respect to an end of a driver 330 on the first side in the axial direction.
FIG. 4 is a plan view illustrating the motor 10 in FIG. 1 without a rotor 100.

### Description OF EMBODIMENT

A motor according to an embodiment of the present invention will be described below with reference to the drawings. In the following drawings, each structure may be different in contraction scale, number, or the like from an actual structure for easy understanding.

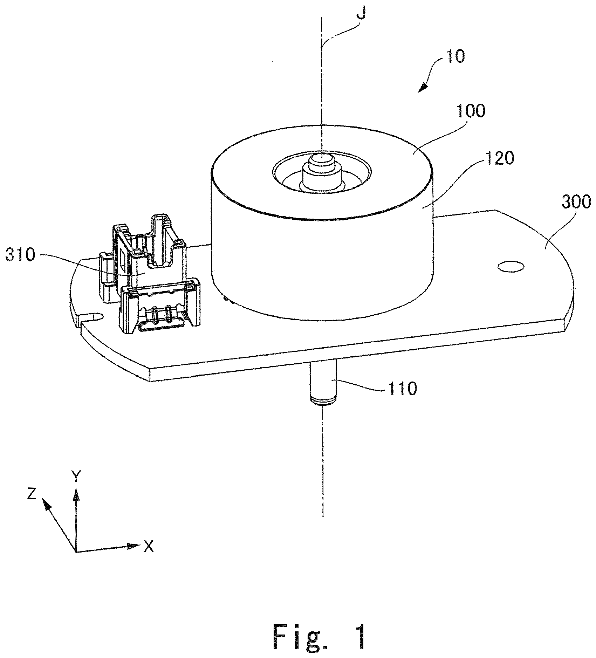

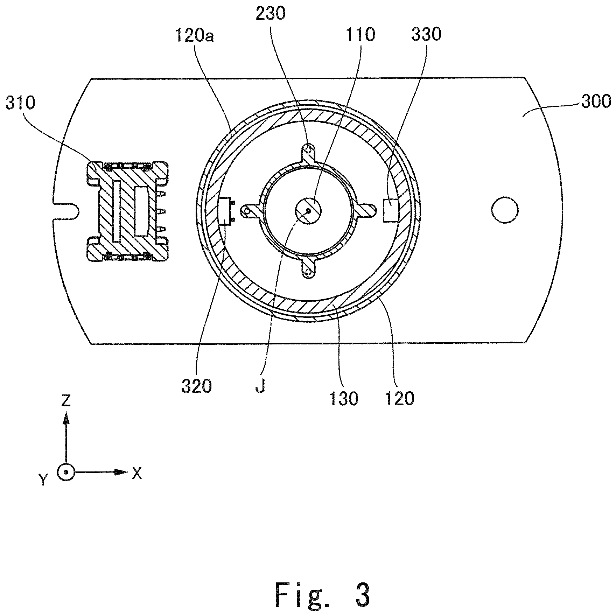

In the drawings, an XYZ coordinate system is shown appropriately as a three-dimensional orthogonal coordinate system. In the XYZ coordinate system, a Y-axis direction is defined as a direction parallel to an axial direction of a central axis J illustrated in FIG. 1. An X-axis direction is defined as a horizontal direction in FIG. 3 in a radial direction with respect to the central axis J. A Z-axis direction is defined as a direction orthogonal to both the X-axis direction and the Y-axis direction. In any of the X-axis direction, the Y-axis direction, and the Z-axis direction, an arrow in each drawing indicates a positive side and the side opposite to the positive side is a negative side.

In the description below, the positive side of the Y-axis direction (+Y side) is referred to as the "front side" or "first side", and the negative side of the Y-axis direction (-Y side) is referred to as the "rear side" or "second side". It is to be understood that the terms "rear side (second side)" and "front side (first side)" are used for description only, and they do not limit the actual positional relation or direction. Unless otherwise particularly stated, a direction parallel to the central axis J (Y-axis direction) is simply referred to as the "axial direction", a radial direction about the central axis J is simply referred to as the "radial direction", and a circumferential direction around the central axis J, that is, a direction around the central axis J is simply referred to as the "circumferential direction". In the radial direction, a direction toward the central axis J is referred to by the term "radially inner" or "radially inward", and a direction away from the central axis J is referred to by the term "radially outer" or "radially outward".

Herein, the wording "extending in the axial direction" refers to not only a case of strictly extending in the axial direction (Z-axis direction), but also a case of extending in a direction at an angle of less than 45° from the axial direction.

Additionally, herein, the wording "extending in the radial direction" refers to not only a case of strictly extending in the radial direction, i.e., in a direction perpendicular to the axial direction (Z-axis direction), but also a case of extending in a direction at an angle of less than 45° from the radial direction. The term "parallel" includes not only a case of being strictly parallel but also a case of inclination at an angle of less than 45°.

### [First embodiment]

### <Overall configuration>

FIG. 1 is a perspective view illustrating a motor according to the first embodiment of the present invention.

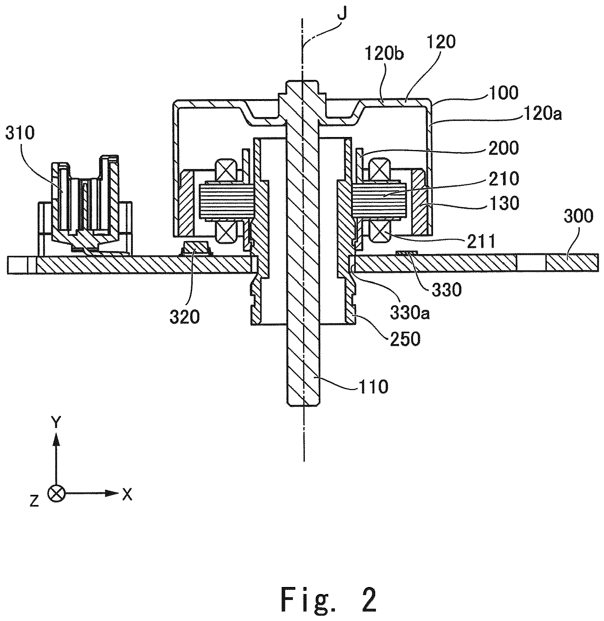

FIG. 2 is a side sectional view for describing a structure of the motor 10 in FIG. 1.

In the present embodiment, the motor 10 is a single-phase brushless DC motor. The motor 10 includes a rotor 100, a stator 200, and a substrate 300.

The rotor 100 is rotatable about the central axis J. The rotor 100 includes a shaft 110 disposed along the central axis J. The rotor 100 has an outer peripheral portion 120 that extends radially outward from the shaft 110 and then extends to a second side in the axial direction. The outer peripheral portion 120 has a bottomed cylindrical shape that covers the stator 200 from a first side in the axial direction. The outer peripheral portion 120 has a bottom 120b extending radially outward from the shaft 110 and a side wall 120a extending to the second side in the axial direction from a radially outer end of the bottom 120b. As will be described in detail later, the rotor 100 includes a rotor magnet 130 on the inner peripheral side of the side wall 120a. The shaft 110 is integrated with the outer peripheral portion 120. The shaft 110 may be a member separate from the outer peripheral portion 120. The shaft 110 is pivotally supported by a bearing, but the bearing is not illustrated.

The stator 200 has a cylindrical support column portion 250 through which the shaft 110 passes, and the support column portion 250 passes through a through hole 300a of the substrate 300. The stator 200 has a stator core 210 on the outside of the support column portion 250 in the radial direction. As will be described in detail later, a winding 211 as a motor coil is wound around the stator core 210. The stator 200 is fixed to the substrate 300. The stator core 210 of the stator 200 is located on the first side in the axial direction with respect to the substrate 300. The stator 200 may be directly fixed to the substrate 300 or may be indirectly fixed thereto.

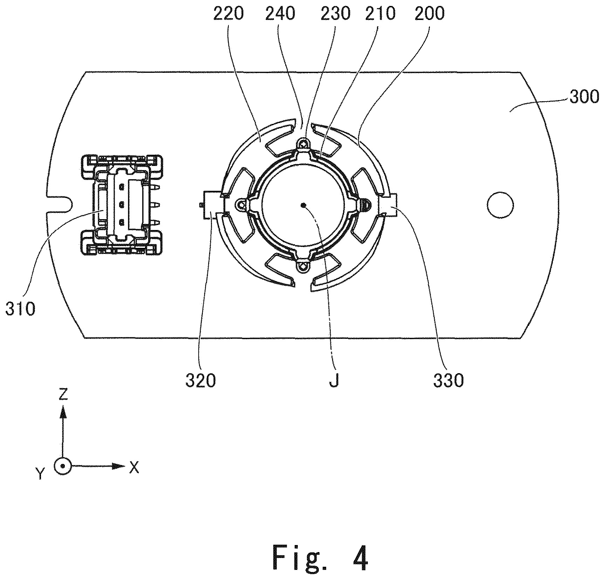

FIG. 3 is a cross-sectional plan view illustrating the motor 10 in FIG. 1 taken along a plane orthogonal to the Y axis and located on the second side in the axial direction with respect to a salient pole portion 220 (see FIG. 4) of the stator 200 and on the first side in the axial direction with respect to the end of a driver 330 on the first side in the axial direction.

The rotor magnet 130 is fixed to the inner peripheral surface of the side wall 120a on an end of the side wall 120a on the second side in the axial direction. The rotor magnet 130 is an annular member in which N poles and S poles are alternately magnetized at equal intervals over the entire circumference in the circumferential direction.

FIG. 4 is a plan view illustrating the motor 10 in FIG. 1 without the rotor 100.

The stator core 210 has a salient pole portion 220 extending radially outward. A plurality of the salient pole portions 220 is disposed in the circumferential direction. In the present embodiment, four salient pole portions 220 are disposed. The stator core 210 has slots 240 between the adjacent salient pole portions 220. The stator 200 has the winding 211 that passes through the slot 240 and is wound around the salient pole portion 220. A radially outer end of the salient pole portion 220 faces the inner peripheral surface of the rotor magnet 130 in the radial direction with an air gap therebetween. That is, the stator 200 faces the rotor 100 in the radial direction with the air gap therebetween.

The substrate 300 is equipped with a connector 310. The connector 310 is mounted on a surface of the substrate 300 on the first side in the axial direction. The connector 310 may be mounted on a surface of the substrate 300 on the second side in the axial direction. The connector 310 electrically connects each component mounted on the substrate 300 to the outside. External wiring is connected to the connector 310.

The substrate 300 is equipped with the driver 330. The driver 330 is mounted on the surface of the substrate 300 on the first side in the axial direction. The driver 330 incorporates a Hall element. The driver 330 is mounted at a position facing, in the axial direction, an end of the rotor magnet 130 on the second side in the axial direction. The Hall element incorporated in the driver 330 detects the rotational position of the rotor 100 and acquires a timing of energization control for the winding 211 wound around the salient pole portion 220. The driver 330 performs energization control on the winding 211 wound around the salient pole portion 220 on the basis of a timing of energization control acquired by the incorporated Hall element. The Hall element incorporated in the driver 330 detects the rotational position of the rotor 100, that is, the circumferential position of the rotor 100, by detecting the boundary between the N pole and the S pole of the rotor magnet 130. The driver 330 is disposed at a circumferential position of the slot 240 of the stator core 210. Therefore, the driver 330 is less likely to be affected by electromagnetic noise by the stator 200, and can more accurately detect the circumferential position of the rotor 100.

The substrate 300 is equipped with a Hall IC 320 separately from the driver 330. That is, the Hall IC 320 is a component different from the Hall element incorporated in the driver 330. The Hall IC 320 is mounted on the surface of the substrate 300 on the first side in the axial direction. The Hall IC 320 is mounted at a position facing, in the axial direction, the end of the rotor magnet 130 on the second side in the axial direction. The Hall IC 320 detects the rotational position of the rotor 100, that is, the circumferential position of the rotor 100, by detecting the boundary between the N pole and the S pole of the rotor magnet 130. According to the motor 10, an accurate circumferential position of the rotor 100 can be output by using the circumferential position of the rotor 100 detected by the Hall IC 320. The feature in which the Hall IC 320 can output the accurate circumferential position of the rotor 100 will be described in detail below.

A distance between the Hall IC 320 and the connector 310 is shorter than a distance between the driver 330 and the connector 310. Therefore, a wire shorter than a wire for connecting the driver 330 and the connector 310 can be used for connecting the Hall IC 320 and the connector 310, and thus, the Hall IC 320 can detect the circumferential position of the rotor more accurately with little influence of electromagnetic noise.

The Hall IC 320 is disposed at a circumferential position of the slot 240 of the stator core 210.
Therefore, the Hall IC 320 is less likely to be affected by electromagnetic noise by the stator 200, and can more accurately detect the circumferential position of the rotor 100. For example, the Hall IC 320 faces the end of the rotor magnet 130 on the second side in the axial direction and is disposed in the slot 240 closest to the connector 310.

During rotation of the rotor 100, a timing at which the driver 330 switches the energization of the winding 211 of the stator 200 is different from a timing at which the boundary between the N pole and the S pole of the rotor magnet 130 comes to the circumferential position of the Hall IC 320. Due to the arrangement of the driver 330 and the Hall IC 320 as described above, it is possible to shift the timing of switching the energization of the winding of the stator 200 that is likely to have electromagnetic noise from the timing of detecting and outputting the circumferential position of the rotor 100 by the Hall IC 320. By shifting the timing as described above, electromagnetic noise which may occur at the time of switching energization is not generated during detection by the Hall IC 320. Thus, the output of the Hall IC 320 is less likely to be affected by the electromagnetic noise, whereby the circumferential position of the rotor 100 can be detected more accurately.

In addition, during rotation of the rotor 100, the timing at which the driver 330 switches the energization of the winding 211 of the stator 200 may be later than the timing at which the boundary between the N pole and the S pole of the rotor magnet 130 comes to the circumferential position of the Hall IC 320. With this configuration, the Hall IC 320 can detect and output the circumferential position of the rotor 100 at a timing at which little electromagnetic noise is generated, whereby the circumferential position of the rotor 100 can be more accurately detected.

In addition, during rotation of the rotor 100, the timing at which the driver 330 switches the energization of the winding 211 of the stator 200 may be earlier than the timing at which the boundary between the N pole and the S pole of the rotor magnet 130 comes to the circumferential position of the Hall IC 320. With this configuration, the Hall IC 320 can detect and output the circumferential position of the rotor 100 at a timing at which little electromagnetic noise is generated. Thus, the circumferential position of the rotor 100 can be more accurately detected, and the detection of the circumferential position of the rotor 100 by the Hall element incorporated in the driver 330 can be used as prediction. For example, energizing the Hall IC 320 after receiving prediction can contribute to power saving.

In addition, in the present embodiment, the driver 330, the stator core 210, the Hall IC 320, and the connector 310 are arranged on a straight line as illustrated in FIGS. 3 and 4. With this arrangement, the wiring can be shortened. Therefore, the circumferential position of the rotor 100 can be detected more accurately with little influence of electromagnetic noise.

### <Operation and effect of motor>

Next, operations and effects of the motor 10 will be described.

The invention according to the embodiment described above provides a single-phase brushless DC motor including: a rotor rotatable about a central axis; a stator including a plurality of salient pole portions, a stator core having a slot between the salient pole portions, and a winding wound around the salient pole portions, the stator facing the rotor with an air gap interposed therebetween; and a substrate fixed to the stator and equipped with a driver that performs energization control of the winding, wherein the driver incorporates a Hall element that acquires a timing of the energization control, and the substrate is equipped with a Hall IC that detects a circumferential position of the rotor separately from the driver.

With this configuration, the circumferential position of the rotor is detected by the Hall IC, so that it is not necessary to use the output of the Hall element incorporated in the driver. Thus, the circumferential position of the rotor can be detected more accurately with little influence of electromagnetic noise.

In addition, the substrate includes a connector to which external wiring is connected, and a distance between the Hall IC and the connector is shorter than a distance between the driver and the connector.

Because of the distance between the Hall IC and the connector being short, the Hall IC is less likely to be affected by electromagnetic noise and can more accurately detect the circumferential position of the rotor.

In addition, the Hall element incorporated in the driver and the Hall IC is disposed at a circumferential position of the slot of the stator core.

Therefore, the circumferential position of the rotor can be detected more accurately with little influence of electromagnetic noise by the stator.

In addition, the rotor includes a rotor magnet that has an N pole and an S pole alternately arranged in the circumferential direction, and during rotation of the rotor, a timing at which the driver switches energization of the winding of the stator is different from a timing at which a boundary between the N pole and the S pole of the rotor magnet comes to a circumferential position of the Hall IC.

With this configuration, the timing of switching energization of the winding of the stator that is likely to have electromagnetic noise is shifted from the timing of outputting the position of the rotor by the Hall IC, whereby the output of the Hall IC is less likely to be affected by the electromagnetic noise, and thus, the circumferential position of the rotor can be detected more accurately.

In addition, during rotation of the rotor, the timing at which the driver switches the energization of the winding of the stator is later than the timing at which the boundary between the N pole and the S pole of the rotor magnet comes to the circumferential position of the Hall IC.

With this configuration, the Hall IC can output the position of the rotor at a timing at which little electromagnetic noise is generated, whereby the circumferential position of the rotor can be more accurately detected.

In addition, during rotation of the rotor, the timing at which the driver switches the energization of the winding of the stator is earlier than the timing at which the boundary between the N pole and the S pole of the rotor magnet comes to the circumferential position of the Hall IC.

With this configuration, the detection of the position of the rotor by the Hall element incorporated in the driver can be used as prediction. For example, energizing the Hall IC after receiving the prediction can contribute to power saving.

In addition, the driver, the stator core, the Hall IC, and the connector are arranged on a straight line.

With this configuration, the driver, the stator core, the Hall IC, and the connector are arranged on a straight line, whereby the wiring can be shortened. Therefore, the circumferential position of the rotor can be detected more accurately with little influence of electromagnetic noise.

The application of the motor according to the above-described embodiment is not particularly limited. Also note that features described above may be combined appropriately as long as no conflict arises.

While the preferable embodiment of the present invention has been described above, the present invention is not limited to such an embodiment, and various modifications and changes are possible within the scope of the spirit of the present invention. The embodiments described above and modifications thereof are included in not only the scope and gist of the invention, but also the invention described in the scope of claims and the equivalent thereof.

### REFERENCE SIGNS LIST

- 10: motor
- 100: rotor
- 200: stator
- 300: substrate
- 310: connector
- 320: Hall IC
- 330: driver

## Claims

1. A single-phase brushless DC motor comprising:
a rotor rotatable about a central axis;
a stator including a plurality of salient pole portions, a stator core having a slot between the salient pole portions, and a winding wound around the salient pole portions, the stator facing the rotor with an air gap interposed therebetween; and
a substrate fixed to the stator and equipped with a driver that performs energization control of the winding, wherein
the driver incorporates a Hall element that acquires a timing of the energization control, and
the substrate is equipped with a Hall IC that detects a circumferential position of the rotor separately from the driver.

2. The single-phase brushless DC motor according to claim 1, wherein
the substrate includes a connector to which external wiring is connected, and
a distance between the Hall IC and the connector is shorter than a distance between the driver and the connector.

3. The single-phase brushless DC motor according to claim 1 or 2, wherein the Hall element incorporated in the driver and the Hall IC is disposed at a circumferential position of the slot of the stator core.

4. The single-phase brushless DC motor according to any one of claims 1 to 3, wherein
the rotor includes a rotor magnet that has an N pole and an S pole alternately arranged in a circumferential direction, and
during rotation of the rotor, a timing at which the driver switches energization of the winding of the stator is different from a timing at which a boundary between the N pole and the S pole of the rotor magnet comes to a circumferential position of the Hall IC.

5. The single-phase brushless DC motor according to claim 4, wherein during the rotation of the rotor, the timing at which the driver switches the energization of the winding of the stator is later than the timing at which the boundary between the N pole and the S pole of the rotor magnet comes to the circumferential position of the Hall IC.

6. The single-phase brushless DC motor according to claim 4, wherein during the rotation of the rotor, the timing at which the driver switches the energization of the winding of the stator is earlier than the timing at which the boundary between the N pole and the S pole of the rotor magnet comes to the circumferential position of the Hall IC.

7. The single-phase brushless DC motor according to claim 2, wherein the driver, the stator core, the Hall IC, and the connector are arranged on a straight line.
